# EUROPEAN PATENT APPLICATION

(11) **EP 4 545 377 A1**
(43) Date of publication of application: **30.04.2025**
(21) Application number: 23826924.5
(22) Date of filing: 30.05.2023
(51) Int. Cl.: B61L 25/02, G01P 3/36

(54) **SPEED CALCULATION DEVICE, SPEED CALCULATION METHOD, AND MOBILE OBJECT CONTROL SYSTEM**

(30) Priority: 21.06.2022 JP 2022099882
(71) Applicant: Hitachi, Ltd., Tokyo 100-8280 (JP)
(72) Inventor: ONO, Yukihiko, Tokyo 100-8280 (JP); IKEDA, Naohiro, Tokyo 100-8280 (JP); MORITA, Kazuki, Tokyo 100-8280 (JP); IMAMOTO, Kenji, Tokyo 100-8280 (JP)
(74) Representative: Mewburn Ellis LLP
(86) International application number: PCT/JP2023/020173
(87) International publication number: WO 2023/248737

(57) **Abstract**

A speed calculation device, including: an overhead wire position calculation unit 111 that measures a distance from an object such as a trolley wire 103 and a catenary wire 104 and obtains, based on a measurement result of a sensing unit 108 installed in a vehicle 101 that moves on rails 102, a first position, which is a position of the object with reference to the rails 102 at a place away from the sensing unit 108 by a first distance, and a second position, which is a position of the object with reference to the rails 102 at a place away from the sensing unit 108 by a second distance; and an estimated speed determination unit 114 that calculates a speed of the vehicle 101 based on a difference between the first distance and the second distance and a difference between times when the first position and the second position coincide with each other. This provides a speed calculation device and a speed calculation method that can more accurately measure the speed of a moving body as compared with a case of not including the configuration of the present invention.

## Description

### Technical Field

The present invention relates to a speed calculation device, a speed calculation method, and a moving body control system. In particular, the present invention relates to a speed calculation device, a speed calculation method, and a moving body control system that can be suitably used to calculate a speed of a vehicle of a railway.

### Background Art

In general, it is difficult to accurately obtain the ground speed from a moving body such as a vehicle of a railway, and in many cases, the ground speed is calculated by integrating rotation pulses of wheels and converting the integrated pulses into the speed.

PTL 1 discloses a speed calculation method for calculating a speed of a vehicle from speed pulses generated by rotation of an axle that rotates wheels in order to calculate the speed.

### Citation List

### Patent Literature

PTL 1: JP 2014-220858 A

### Summary of Invention

### Technical Problem

However, when rotation pulses of the wheels are used, if a phenomenon such as spinning or sliding occurs, an accurate speed cannot be obtained. On the other hand, a technique of compensating for idling using rotation pulses of a plurality of wheels or a method of using a free wheel only for speed measurement are considered, but there is a problem of an increasing cost. As an existing technique for measuring a speed in a non-contact manner, a Doppler velocimeter and a spatial filter velocimeter using laser light or microwaves are known. However, these Doppler velocimeter and spatial filter velocimeter have a problem that when the distance between the moving body and an object irradiated with the laser light fluctuates depending on the timing of irradiation with the laser light or the microwave, an accurate speed cannot be calculated due to the fluctuation range of the distance.

An object of the present invention is to provide a speed calculation device and a speed calculation method that can more accurately measure the speed of a moving body as compared with a case of not including the configuration of the present invention.

### Solution to Problem

In order to solve the above problem, the present invention is a speed calculation device, including: a position calculation unit that measures a distance to an object and obtains, based on a measurement result of a distance sensor installed in a moving body that moves on a track, a first position, which is a position of the object with reference to the track at a place away from the distance sensor by a first distance, and a second position, which is a position of the object with reference to the track at a place away from the distance sensor by a second distance; and a speed calculation unit that calculates a speed of the moving body based on a difference between the first distance and the second distance and a difference between times when the first position and the second position coincide with each other.

Here, the object can have a position continuously shifting in accordance with movement of the moving body. In this case, the number of measurement points for distance measurement can be increased.

The object having a position continuously shifting can be an overhead wire of a railway. This case is less affected by environmental changes, as compared with a case of using other ground equipment.

Furthermore, the overhead wire can be at least one of a trolley wire and a catenary wire. In this case, the speed can be measured more continuously, and even if the speed of the vehicle changes, a more accurate speed can be calculated.

Furthermore, the position calculation unit can obtain the first position and the second position that change by the trolley wire shifting in a left-right direction in accordance with movement of the moving body. In this case, the speed of the vehicle can be continuously measured using the shifting in the left-right direction of the trolley wire.

Furthermore, the position calculation unit can obtain the first position and the second position that change by the catenary wire shifting in an up-down direction in accordance with movement of a train. In this case, the speed of the vehicle can be continuously measured using the shifting in the up-down direction of the catenary wire.

There can be a plurality of the tracks, and the track and the overhead wire for obtaining the first position and the second position can be different from the track and the overhead wire used when the mobile body moves. In this case, detection of the overhead wire is easier.

Furthermore, a trajectory calculation unit that obtains a trajectory of each of the first position and the second position can be further included, and the speed calculation unit can calculate a speed of the moving body based on the trajectory. In this case, a measurement error of the distance can be reduced.

Then, a trajectory matching unit that obtains a difference between the times by performing matching of the trajectory of each of the first position and the second position can be further included. In this case, a time difference can be obtained more accurately.

A track recognition unit that extracts a first point group corresponding to the track as a plurality of points whose distances are measured by the distance sensor can be further included, and the position calculation unit can obtain the first position and the second position with reference to a track plane that is a plane including the first point group. In this case, the first position and the second position can be measured more accurately.

Furthermore, an object recognition unit that extracts a second point group corresponding to the object at the first position and the second position as a plurality of points whose distances are measured by the distance sensor can be further included, and the position calculation unit can calculate the first distance and the second position by classifying the second point group by distance and performing coordinate system conversion with reference to the track plane. In this case, the first position and the second position can be measured more accurately.

The distance sensor can measure a distance on planes present at at least three distances as a plane intersecting a moving direction of the moving body, and the track recognition unit can extract the first point group from a measurement result on a plane present at one distance among the at least three distances and extract the second point group from a measurement result on planes present at distances other than the one distance. In this case, the first point group and the second point group are more easily extracted.

Furthermore, the plurality of points can be acquired from the distance sensor attached to a side surface side of a vehicle relative to a center line in an up-down direction on a plane intersecting a moving direction of the moving body. In this case, more pieces of information on the feature points of the object can be captured.

The present invention is a speed calculation method, including: measuring a distance to an object and obtains, based on a measurement result of a distance sensor installed in a moving body that moves on a track, a first position, which is a position of the object with reference to the track at a place away from the distance sensor by a first distance, and a second position, which is a position of the object with reference to the track at a place away from the distance sensor by a second distance; and calculating a speed of the moving body based on a difference between the first distance and the second distance and a difference between times when the first position and the second position coincide with each other.

Furthermore, the present invention is a moving body control system including: a speed calculation device that calculates a speed of a moving body moving on a track; and a control device that controls movement of the moving body based on a calculated speed, wherein the speed calculation device includes a position calculation unit that measures a distance to an object and obtains, based on a measurement result of a distance sensor installed in the moving body, a first position, which is a position of the object with reference to the track at a place away from the distance sensor by a first distance, and a second position, which is a position of the object with reference to the track at a place away from the distance sensor by a second distance, and a speed calculation unit that calculates a speed of the moving body based on a difference between the first distance and the second distance and a difference between times when the first position and the second position coincide with each other.

### Advantageous Effects of Invention

According to the present invention, it is possible to provide a speed calculation device and a speed calculation method that can more accurately measure the speed of a moving body as compared with a case of not including the configuration of the present invention.

### Brief Description of Drawings

[FIG. 1] FIG. 1 is a conceptual diagram illustrating an overall configuration of a train control system according to the present embodiment.
[FIG. 2] FIG. 2 is a cross-sectional view of a vehicle taken along a plane orthogonal to a traveling direction of the vehicle.
[FIG. 3] FIG. 3 is a flowchart showing an operation of a vehicle speed recognition system.
[FIG. 4] FIGS. 4(a) and 4(b) are views illustrating a state in which a trolley wire is installed.
[FIG. 5] FIG. 5 is a view describing a rail plane and a coordinate system with reference to the rail plane.
[FIG. 6] FIGS. 6(a) to 6(c) are views describing step S105 to step S107 of FIG. 3 in more detail.
[FIG. 7] FIG. 7 is a view describing step S105 to step S107 in FIG. 3 in more detail.
[FIG. 8] FIGS. 8(a) and 8(b) are views illustrating a case of calculating the speed of the vehicle when a catenary wire is used.
[FIG. 9] FIG. 9 is a view illustrating a case of calculating the speed of the vehicle when a catenary wire is used.

### Description of Embodiments

Embodiments of the present invention are described below with reference to the drawings.

### [First Embodiment]

First, the first embodiment will be described. In the first embodiment, a description of a case of calculating the speed of a moving body using a shift in a left-right direction of a trolley wire 103 in an overhead wire of a railway will be given.

### <Description of Overall Configuration of Train Control System 1>

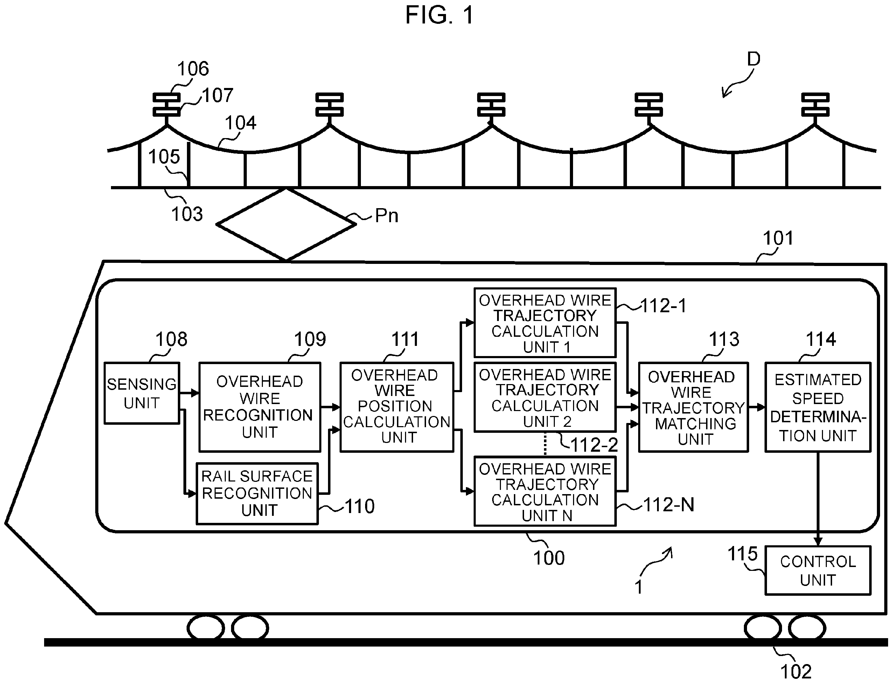

FIG. 1 is a conceptual diagram illustrating an overall configuration of a train control system 1 according to the present embodiment.

The train control system 1 that is illustrated is an example of the moving body control system. The train control system 1 includes a vehicle speed recognition system 100 and a control unit 115.

The vehicle speed recognition system 100 that is illustrated is installed in a vehicle 101, which is an example of the moving body. The vehicle 101 is a vehicle of a railway. The vehicle 101 is supplied with electric power via a pantograph Pn from electric path equipment D provided along left and right rails 102 as an example of the track, and drives an electric motor not illustrated and the like. Then, the vehicle 101 moves on the rails 102 by a driving force of the electric motor that is driven or the like. The vehicle speed recognition system 100 functions as a speed calculation device that calculates the speed of the vehicle 101 moving on the rails 102.

Representative components of the electric path equipment D include the trolley wire 103 in contact with the vehicle 101 via the pantograph Pn, a catenary wire 104 and a hanger 105 suspending and supporting the trolley wire 103, and a supporting tool 106 and an insulating tool 107 supporting them. In addition to them, the electric path equipment D normally includes various elements (not illustrated) such as a tension adjusting tool, a feeder branch device, and an insulator for insulation. Hereinafter, unless otherwise specified, these components constituting the electric path equipment D above the vehicle 101 are collectively referred to as an "overhead wire".

The vehicle speed recognition system 100 includes a sensing unit 108, an overhead wire recognition unit 109, a rail surface recognition unit 110, an overhead wire position calculation unit 111, overhead wire trajectory calculation units 112-1 to 112-N, an overhead wire trajectory matching unit 113, and an estimated speed determination unit 114.

The sensing unit 108 is a distance sensor that measures a distance, and is, for example, light detection and ranging (LIDAR). The LIDAR measures a three-dimensional shape by scanning the overhead wire and the rails 102. Then, the sensing unit 108 transmits the three-dimensional shape data (measurement data) to the overhead wire recognition unit 109 and the rail surface recognition unit 110.

Here, the LIDAR is a device that irradiates an object with a laser and receives reflection of the laser to measure the distance to the object. Based on the principle, the accuracy of distance measurement is as relatively high as several mm to several cm. In the LIDAR, with one straight laser being a basic unit, and the irradiation direction is periodically changed one after another at a high speed of several ten Hz, whereby the surface shape of the object is grasped as a collection of fine points (point group). Therefore, the measurement data described above is data (data group) expressing the three-dimensional shape of the overhead wire or the rails 102 as a point group.

Note that the sensing unit 108 is preferably three-dimensional LIDAR, which can stereoscopically change the irradiation direction. However, other than three-dimensional LIDAR, the LIDAR includes two-dimensional LIDAR, which planarly changes the irradiation direction, and even if the two-dimensional LIDAR is used alone or in combination of a plurality of them, the surface shape of the object can be similarly captured (although the information amount that can be acquired at a time is smaller than that in a case of using the three-dimensional LIDAR), and the content described in the following description can be similarly performed.

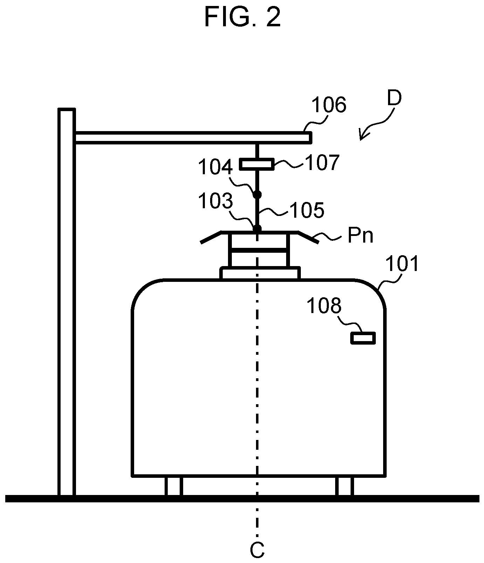

FIG. 2 is a cross-sectional view of the vehicle 101 taken along a plane orthogonal to the traveling direction of the vehicle 101.

Hereinafter, the positional relationship among the vehicle 101, the sensing unit 108, and the overhead wire (the trolley wire 103, the catenary wire 104, a hanger 105, the supporting tool 106, and the insulating tool 107) will be described in detail with reference to FIG. 2.

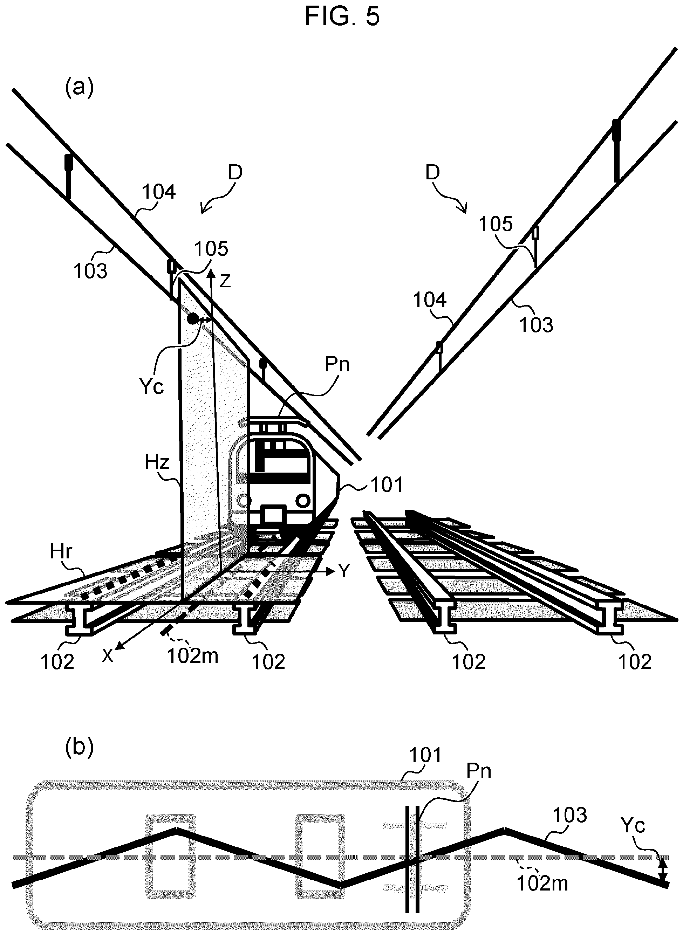

The sensing unit 108 passes through a contact point between the pantograph Pn and the trolley wire 103 and is installed at a place off from a center line C in the up-down direction of the vehicle 101. It can also be said that the sensing unit 108 is attached to a side surface side of the vehicle 101 relative to the center line C in the up-down direction on the plane intersecting the moving direction of the vehicle 101. Due to this, the LIDAR that is the sensing unit 108 is installed in the vehicle 101 so that the overhead wire can be scanned from an oblique direction. This is a thought that it is advantageous for the subsequent processing (matching processing described in FIG. 5) to capture as much information on the feature points of the overhead wire as possible, and this is for capturing as many components of the overhead wire as possible. For example, when the sensing unit 108 is installed on the center line C and scanning is performed from a position immediately below the trolley wire 103, the hanger 105 and the catenary wire 104 suspending the trolley wire 103 in the vertical direction are hidden behind the trolley wire 103, and scanning is not performed. On the other hand, in the present embodiment, the sensing unit 108 is provided at a position deviated from immediately below the trolley wire 103, the position off from the center line C, and scanning is performed obliquely from the position. Due to this, scanning is performed on the side surface of the hanger 105 periodically stretched and the side surface of the catenary wire 104 periodically deflected, and the features of them can be taken in into the measurement data.

Here, the description of the shape of the supporting tool 106 will be supplemented. The supporting tool 106 is normally made of a tough material such as a steel frame because it is necessary to support all the structures below the supporting tool 106 including the catenary wire 104 and the trolley wire 103, and is larger in size than any other structures of the overhead wire. Therefore, it is relatively easy to grasp the three-dimensional shape of it with the LIDAR. There is no concern that the supporting tool 106 warps or swings like an electric wire. Therefore, each time the vehicle 101 travels, it looks the same every time, and there is relatively little concern of overlooking. Hence, it can be said to be easily captured by scanning by the LIDAR. The supporting tools 106 are usually erected at intervals of several hundred meters.

Next, configurations of the vehicle 101 other than the sensing unit 108 will be described.

The overhead wire recognition unit 109 is an example of the object recognition unit, and extracts and passes, to the overhead wire position calculation unit 111, measurement data (measurement result) of the overhead wire from among the measurement data acquired from the sensing unit 108.

The rail surface recognition unit 110 is an example of the track recognition unit, and extracts and passes, to the overhead wire position calculation unit 111, measurement data (measurement result) of the upper surfaces of the rails 102 from the measurement data acquired from the sensing unit 108.

The overhead wire position calculation unit 111 is an example of the position calculation unit, and calculates an overhead wire position based on two (a pair of) rail surfaces based on measurement data. Here, the overhead wire position calculation unit 111 classifies the overhead wire positions by distance. Here, it is assumed that the overhead wire position calculation unit 111 classifies distances into N (1 to N) by distance.

The overhead wire trajectory calculation units 112-1 to 112-N are examples of the trajectory calculation unit, and obtains trajectories of the overhead wire positions calculated by the overhead wire position calculation unit 111. At this time, the overhead wire trajectory calculation units 112-1 to 112-N each obtain a trajectory of one overhead wire position. That is, the overhead wire trajectory calculation units 112-1 to 112-N obtain trajectories of N overhead wire positions by distance. Note that hereinafter, when the overhead wire trajectory calculation units 112-1 to 112-N are not distinguished from one another, they may be simply called an "overhead wire trajectory calculation unit 112".

The overhead wire trajectory matching unit 113 is an example of the trajectory matching unit, and coincides with the overhead wire trajectories of a plurality of sites (N places) obtained from the overhead wire trajectory calculation units 112-1 to 112-N and obtains a time interval and a distance interval between them.

The estimated speed determination unit 114 is an example of the speed calculation unit, and calculates and transmits, to the control unit 115, a speed V of the vehicle 101 from the time interval and the distance interval of the overhead wire site obtained by the overhead wire trajectory matching unit 113.

The control unit 115 is an example of the control device that controls movement of the vehicle 101 based on the speed calculated by vehicle speed recognition system 100. The control unit 115 is, for example, an application of vehicle control that operates using the estimated speed of the vehicle 101. The control unit 115 corresponds to, for example, an automatic operation system (automatic train operation (ATO)) that automatically controls acceleration and deceleration so that the vehicle 101 travels between predetermined points (e.g., between train stations) at a scheduled time (timetable). In addition to the ATO, a signal system (automatic train protection (ATP)) that controls a brake so as to secure a safe distance between vehicles is an example of an application that uses the estimated speed of the vehicle 101.

Note that some or all of the functions of the vehicle speed recognition system 100 can be implemented by a computer device that operates by cooperation of software and hardware resources. That is, a central processing unit (CPU) not illustrated inside a computer provided in the vehicle speed recognition system 100 executes a program for implementing each function, and implements each function. This program is saved in a storage such as a hard disk drive (HDD) or a solid state drive (SSD) or an auxiliary storage device such as a read only memory (ROM), and is loaded from this auxiliary storage device to a main storage device (random access memory (RAM)) and executed. These functions can also be implemented by hardware such as a dedicated circuit.

### <Description of Operation of Vehicle Speed Recognition System 100>

Next, the operation of the vehicle speed recognition system 100 will be described.

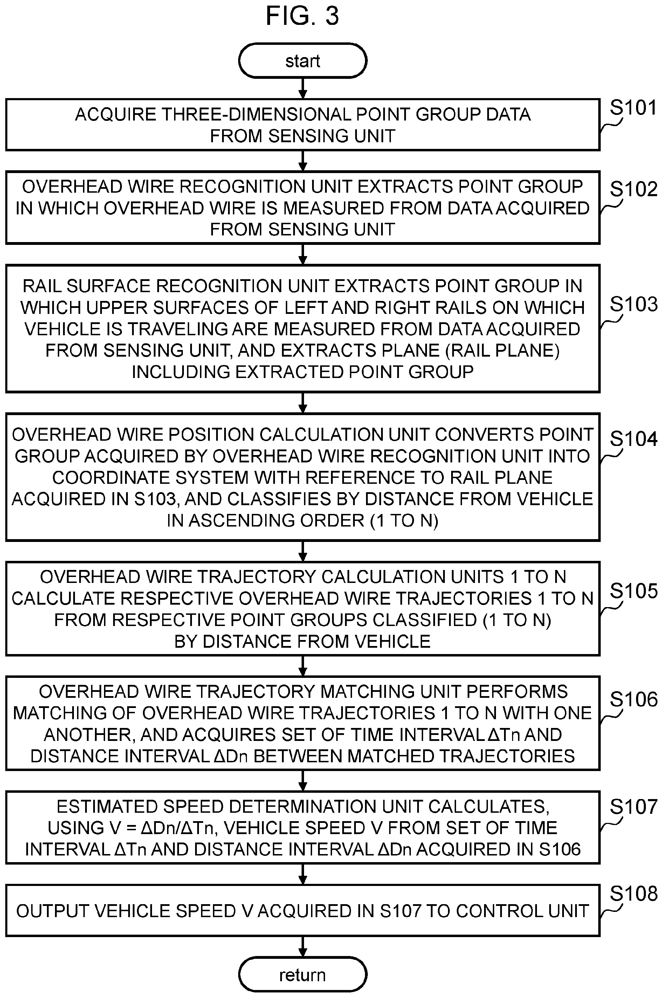

FIG. 3 is a flowchart showing the operation of the vehicle speed recognition system 100.

Each processing (step S101 to step S108) shown in FIG. 3 is executed by the vehicle speed recognition system 100. Each processing will be described below.

In step S101, three-dimensional point group data is acquired as measurement data from the sensing unit 108 installed so as to be able to observe the rails 102 and the overhead wire (the trolley wire 103, the catenary wire 104, the hanger 105, the supporting tool 106, and the insulating tool 107). In the first embodiment, the speed is detected using deviation of the trolley wire 103 from among them.

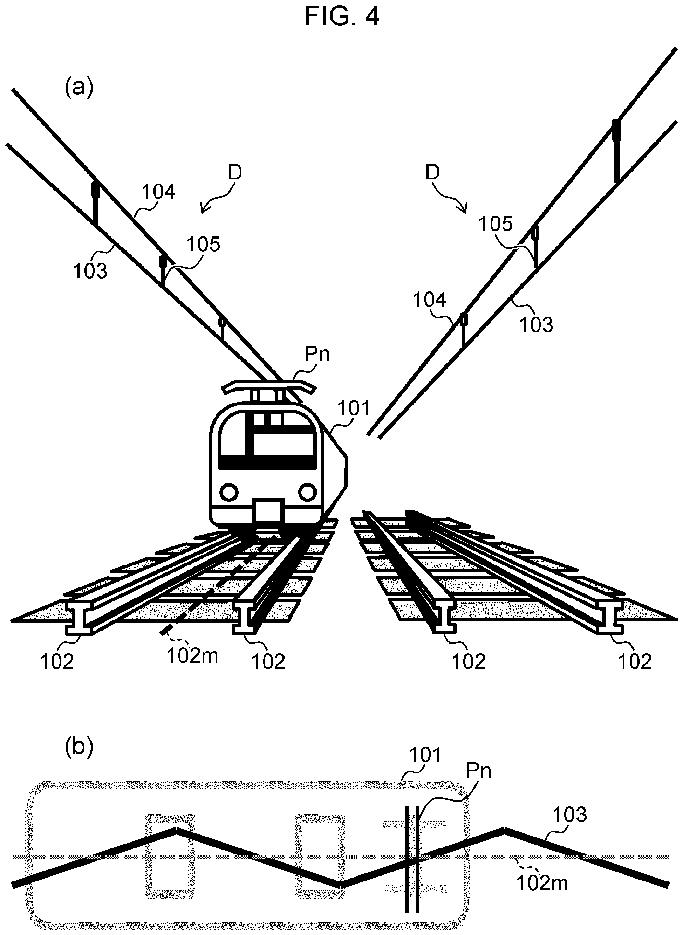

FIGS. 4(a) and 4(b) are views illustrating a state in which the trolley wire 103 is installed.

As illustrated in FIGS. 4(a) and 4(b), by receiving a high voltage by a sliding plate provided in the pantograph Pn coming into sliding contact with the trolley wire 103, the vehicle 101 travels on the left and right rails 102. At this time, in order to make wear of the sliding plate uniform, the trolley wire 103 is pulled outward for each utility pole, and as illustrated in FIG. 4(b), the trolley wire 103 is installed to deviate left and right in a zigzag manner (left-right deviation. More specifically, the trolley wire 103 is installed so as to shift in an intersecting direction (in this case, the left-right direction of the vehicle 101) with a center line 102m of the left and right rails 102 as the vehicle 101 travels. That is, the trolley wire 103 shifts in the left-right direction in accordance with movement of the vehicle 101, whereby the trolley wire 103 has the position changing in the left-right direction when viewed from the vehicle 101. In this case, the position of the trolley wire 103 regularly changes in the left-right direction with the center line 102m as a center when viewed from the vehicle 101.

In the present embodiment, as described below, the speed is detected using the deviation in the left-right direction of the trolley wire 103.

Returning to FIG. 3, in step S102, the overhead wire recognition unit 109 extracts a point group in which the overhead wire including the trolley wire 103 is measured from the measurement data acquired from the sensing unit 108.

In step S103, the rail surface recognition unit 110 extracts a point group in which the upper surfaces of the left and right rails 102 on which the vehicle 101 is traveling is measured from the measurement data acquired from the sensing unit 108. Furthermore, the rail surface recognition unit 110 extracts a rail plane (track plane) Hr as a plane including the extracted point group.

In step S104, the overhead wire position calculation unit 111 converts the point group acquired by the overhead wire recognition unit 109 into a coordinate system with reference to the rail plane Hr acquired in step S103, and classifies the point group by distance from the vehicle 101 (e.g., classifies the point group into N of 1 to N by distance).

Here, the coordinate system with reference to the rail plane Hr is a coordinate system defined using the rail plane Hr extracted by the rail surface recognition unit 110. In step S104, the overhead wire position calculation unit 111 converts the position of the point group acquired by the overhead wire recognition unit 109 into the position in this coordinate system.

FIG. 5 is a view describing the rail plane Hr and the coordinate system with reference to the rail plane Hr.

As illustrated, the rail plane Hr is a plane passing through the upper surfaces of the left and right rails 102. An X-axis direction, a Y-axis direction, and a Z-axis direction are illustrated as the coordinate system with reference to the rail plane Hr. The X-axis direction is a traveling direction of the vehicle 101. The Y-axis direction is defined as a direction orthogonal to the left direction with respect to the traveling direction of the vehicle 101. Furthermore, the Z-axis direction is defined as a direction orthogonal to the upward direction with respect to the traveling direction of the vehicle 101. The position of the trolley wire 103 can be regarded as a distance Yc from a plane Hz extending in the Z direction from the center line 102m of the left and right rails 102. It can also be said that the distance Yc represents the position of the trolley wire 103 with reference to the rail plane Hr.

Returning to FIG. 3 again, in step S105, the overhead wire trajectory calculation units 112-1 to 112-N respectively calculate overhead wire trajectories 1 to N from respective point groups (1 to N) classified by distance from the vehicle 101. That is, the overhead wire trajectory calculation units 112-1 to 112-N calculate, as the overhead wire trajectories 1 to N, trajectories of the positions of the respective distances Yc at the positions of the trolley wire 103 at the N distances as the distances from the vehicle 101.

In step S106, the overhead wire trajectory matching unit 113 performs matching among the overhead wire trajectories 1 to N, and acquires a set of a time interval ΔTn and a distance interval ΔDn between the trajectories having been matched.

In step S107, the estimated speed determination unit 114 calculates the speed V of the vehicle 101 using an expression of V = ΔDn/ΔTn from the set of the time interval ΔTn and the distance interval ΔDn acquired in step S106.

In step S108, the speed V of the vehicle 101 acquired in step S107 is output to the control unit 115, and the processing ends.

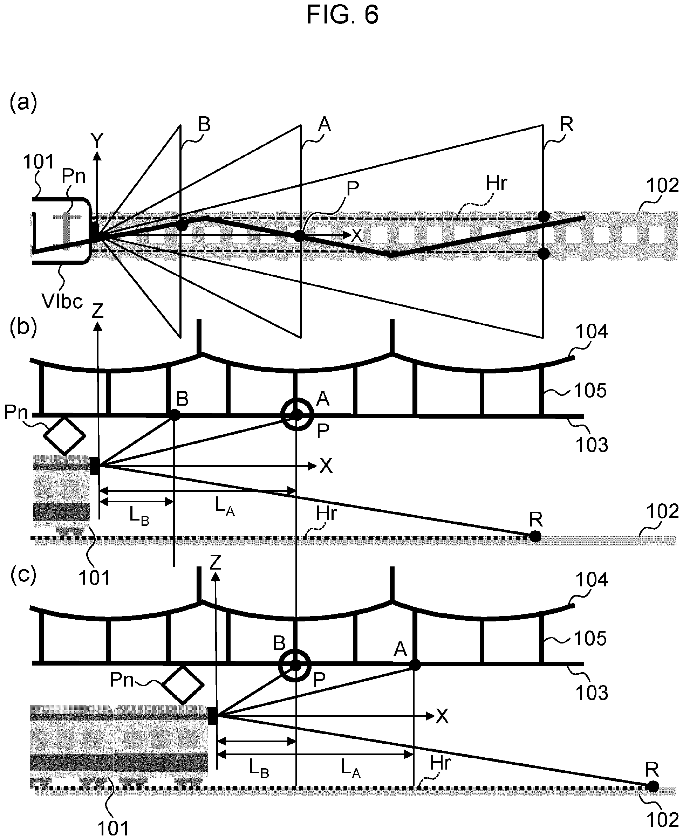

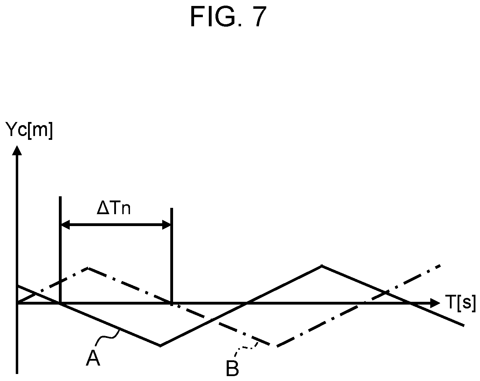

FIGS. 6(a) to 6(c) and FIG. 7 are views describing step S105 to step S107 in FIG. 3 in more detail.

Among them, FIG. 6(a) is a view when the vehicle 101, the rails 102, and the trolley wire 103 are viewed from above. FIGS. 6(b) and 6(c) are views when viewed from a VIbc direction of FIG. 6(a), and are views when the vehicle 101, the rails 102, and the trolley wire 103 are viewed along the Y direction.

In the above description, the overhead wire trajectory calculation units 112-1 to 112-N acquire the positions of the trolley wires 103 at N distances in step S105. However, in the following description, a case of N = 2 will be described in order to simplify the description. That is, the overhead wire trajectory calculation unit 112 obtains trajectories (overhead wire trajectories) of two overhead wire positions. That is, the overhead wire trajectory calculation unit 112 calculates the trajectories of the positions of the distance Yc at the two overhead wire positions.

The sensing unit 108 is LIDAR having three two-dimensional scan planes. In FIGS. 6A to 6C, these are illustrated as a scan plane A, a scan plane B, and a scan plane R. Among them, the scan plane R is used to measure the distance to the upper surfaces of the left and right rails 102 and extract the rail plane Hr. The scan planes A and B are used to measure the trolley wire 103 and calculate the respective distances Yc at the positions of the trolley wire 103 at two distances.

When the vehicle 101 travels, the position in the direction (Y direction) perpendicular to the traveling direction of the point cloud observed on the scan plane A fluctuates as indicated by a curve A in the graph of FIG. 7. Similarly, the position of the point cloud observed on the scan plane B fluctuates as indicated by a curve B. In FIG. 7, the horizontal axis represents time T, and the vertical axis represents the distance Yc.

Here, a place where the scan plane A and the scan plane B cross the trolley wire 103 is at a substantially constant distance from the vehicle 101, and let the distances be L_{A} and L_{B}. In the present embodiment, the distance L_{A} is an example of the first distance, and distance L_{B} is an example of the second distance. Then, the curve A of the graph of FIG. 7 represents the position of the distance Yc, which is a position of the trolley wire 103 with reference to the rails 102 at a position away from the sensing unit 108 by the distance L_{A}, and can be regarded as a trajectory thereof. The position of the distance Yc in the distance L_{A} is an example of the first position, which is the position of the object with reference to the track. The curve B of the graph of FIG. 7 represents the position of the distance Yc, which is a position of the trolley wire 103 with reference to the rails 102 at a position away from the sensing unit 108 by the distance L_{B}, and can be regarded as a trajectory thereof. The position of the distance Yc in the distance L_{B} is an example of the second position, which is the position of the object with reference to the track.

At this time, the overhead wire trajectory calculation unit 112 may perform fitting using a known method such as a least squares method to calculate the trajectory. That is, the distance measured by the sensing unit 108 may include a measurement error. When the curve A or the curve B is drawn, performing the fitting can reduce a measurement error and give a more accurate trajectory. As a result, the distance Yc can be grasped more accurately.

When shifted by the certain time interval ΔTn, the curve B of the graph of FIG. 7 substantially coincides with the curve A. This means that the same position of the trolley wire 103 is measured while being shifted by the time interval ΔTn. That is, the vehicle 101 present at the position illustrated in FIG. 6(b) measures a position P of the trolley wire 103 on the scan plane A. Then, when the time interval ΔTn elapses and the vehicle 101 travels to the place illustrated in FIG. 6(c), the same position P of the trolley wire 103 is measured on the scan plane B. This time interval ΔTn can be obtained by performing matching of the curve A and the curve B by the overhead wire trajectory matching unit 113. That is, the shift amount when any one of the curve A and the curve B is shifted in the time direction and coincides with the other is the time interval ΔTn.

Then, the estimated speed determination unit 114 obtains the speed V of the vehicle 101 using the expression of V = ΔDn/ΔTn from the distances L_{A}, L_{B}, and ΔTn. ΔDn is a distance interval between the distances L_{A} and L_{B}, and is obtained by L_{A} - L_{B}. As described above, the estimated speed determination unit 114 can calculate the speed of the vehicle 101 based on the difference between (distance interval ΔDn) distance L_{A} and distance L_{B} and the difference (time interval ΔTn) between times at which the position of the distance Yc at the distance L_{A} coincides with the position of the distance Yc at the distance L_{B}. However, here, in order to obtain the time interval ΔTn, the overhead wire trajectory calculation unit 112 obtains the respective trajectories of the position of the distance Yc at the distance L_{A} and the position of the distance Yc at the distance L_{B}, and the overhead wire trajectory matching unit 113 obtains the time interval ΔTn by performing matching of the respective trajectories. Use of the trajectory improves the accuracy of the time interval ΔTn.

Note that in this case, it can be said that, in step S103 of FIG. 3, the first point group corresponding to the rails 102 is extracted as a plurality of points whose distances are measured by the sensing unit 108.

Furthermore, it can be said that, in step S102 of FIG. 3, the second point group corresponding to the trolley wire 103 at the position of the distance Yc at the distance L_{A} and the position of the distance Yc at the distance L_{B} is extracted as a plurality of points whose distances are measured by the sensing unit 108.

Furthermore, it can be said that, in step S104 of FIG. 3, the overhead wire position calculation unit 111 obtains the position of the distance Yc at the distance L_{A} and the position of the distance Yc at the distance L_{B} with reference to the rail plane Hr, which is a plane including the first point group. It can be said that, in step S104, the overhead wire position calculation unit 111 calculates the position of the distance Yc at the distance L_{A} and the position of the distance Yc at the distance L_{B} by classifying the second point group by distance and performing coordinate system conversion with reference to the rail plane Hr.

In step S101 of FIG. 3, the sensing unit 108 measures a distance on planes present at at least three distances as a plane intersecting the moving direction of the vehicle 101. Then, it can be said that, in step S103, the rail surface recognition unit 110 extracts the first point group from the measurement result on the plane (in this case, the scan plane R) present at one distance among the at least three distances, and in step S102, extracts the second point group from the measurement result on the place (in this case, the scan planes A and B) at distances other than the one distance.

### [Second Embodiment]

Next, the second embodiment will be described. In the second embodiment, as an overhead wire of a railway, the speed of the moving body is calculated using not a shift in a left-right direction of the trolley wire 103 but a shift in an up-down direction of the catenary wire 104.

When the left-right direction of the trolley wire 103 has a small or no shift, it may be difficult to obtain the speed of the vehicle 101 from the trolley wire 103. Therefore, in the second embodiment, the object to be observed by the sensing unit 108 is not the trolley wire 103 but the catenary wire 104.

The functional configuration of the vehicle speed recognition system 100 of the second embodiment is similar to that in the case illustrated in FIG. 1. That is, similarly to the first embodiment, the train control system 1 includes the vehicle speed recognition system 100 and the control unit 115. Then, the vehicle speed recognition system 100 includes the sensing unit 108, the overhead wire recognition unit 109, the rail surface recognition unit 110, the overhead wire position calculation unit 111, the overhead wire trajectory calculation units 112-1 to 112-N, the overhead wire trajectory matching unit 113, and the estimated speed determination unit 114.

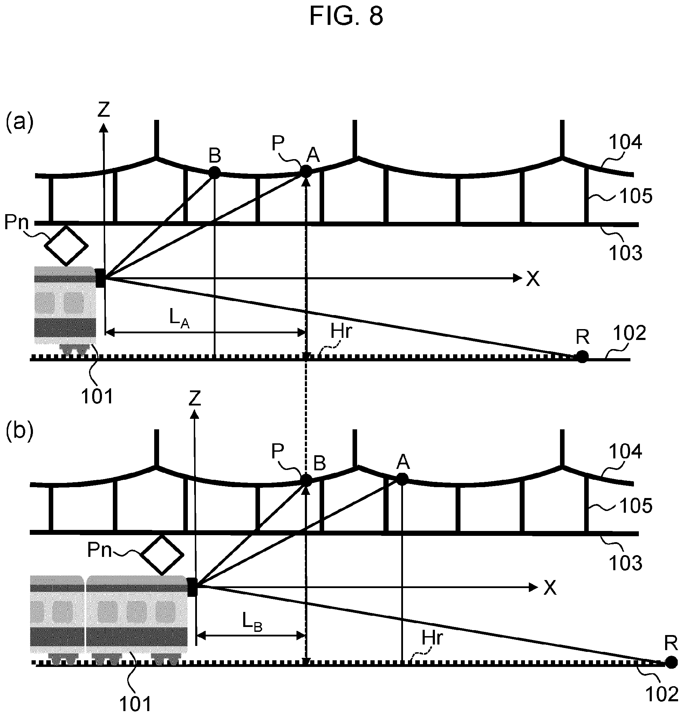

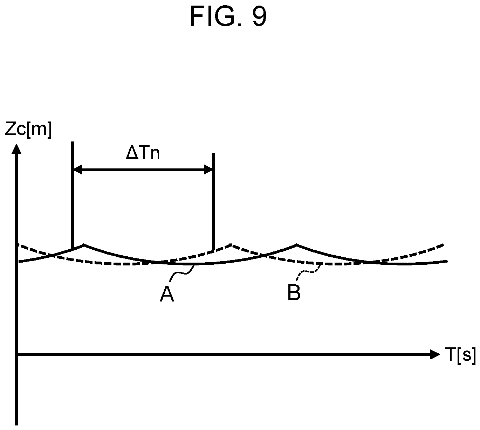

FIGS. 8(a) and 8(b) and FIG. 9 are views illustrating a case of calculating the speed of the vehicle 101 when the catenary wire 104 is used.

Among them, FIGS. 8(a) and 8(b) are views of the vehicle 101 and the like when viewed from directions similar to those in FIGS. 6(b) and 6(c). In this case, a case where the vehicle 101, the rails 102, and the catenary wire 104 are viewed along the Y direction is illustrated.

It is similar to the first embodiment that the scanning plane R is used to measure the distance to the upper surfaces of the left and right rails 102 and extract the rail plane Hr. On the other hand, the scan planes A and B are used to measure the catenary wire 104, and measure the positions in the up-down direction (Z direction) with reference to the rail plane Hr of the catenary wires 104 present at two distances.

The catenary wire 104 is installed so as to be bent in the up-down direction (Z direction) as illustrated. That is, the catenary wire 104 is installed so as to shift in the up-down direction (Z direction) as the vehicle 101 travels. Therefore, when viewed from the vehicle 101, the catenary wire 104 has a position changing in the up-down direction. The position of the catenary wire 104 regularly changes in the up-down direction when viewed from the vehicle 101.

When the vehicle 101 travels, the position in the direction perpendicular to the traveling direction of the point cloud observed on the scan plane A fluctuates as indicated by the curve A in the graph of FIG. 9. Similarly, the position of the point cloud observed on the scan plane B fluctuates as indicated by the curve B. In FIG. 9, the horizontal axis represents the time T, and the vertical axis represents a distance Zc between the rail plane Hr and the catenary wire 104.

Similarly to the first embodiment, the overhead wire trajectory calculation unit 112 may perform fitting using a known method such as a least squares method to calculate the trajectory. As a result, the distance Zc between the rail plane Hr and the catenary wire 104 can be grasped more accurately.

Hereinafter, when the trolley wire 103 is replaced with the catenary wire 104, and the distance Yc is replaced with the distance Zc, the second embodiment is substantially similar to the first embodiment.

That is, a place where the scan plane A and the scan plane B cross th catenary wire 104 is at a substantially constant distance from the vehicle 101, and let the distances be L_{A} and L_{B}. Then, the curve A of the graph of FIG. 9 represents the distance Zc, which is a position of the catenary wire 104 with reference to the rails 102 at a position away from the sensing unit 108 by the distance L_{A}, and can be regarded as a trajectory thereof. The position of the distance Zc in the distance L_{A} is an example of the first position, which is the position of the object with reference to the track. The curve B of the graph of FIG. 9 represents the distance Zc, which is a position of the catenary line 104 with reference to the rails 102 at a position away from the sensing unit 108 by the distance L_{B}, and can be regarded as a trajectory thereof. The position of the distance Zc in the distance L_{B} is an example of the second position, which is the position of the object with reference to the track.

Furthermore, when shifted by the certain time interval ΔTn, the curve B of the graph of FIG. 9 substantially coincides with the curve A. This means that the same position of the catenary wire 104 is measured while being shifted by the time interval ΔTn. That is, the vehicle 101 present at the position illustrated in FIG. 8(a) measures the position P of the catenary wire 104 on the scan plane A. Then, when the time interval ΔTn elapses and the vehicle 101 travels to the place illustrated in FIG. 8(b), the same position P of the catenary wire 104 is measured on the scan plane B. This time interval ΔTn can be obtained by performing matching of the curve A and the curve B by the overhead wire trajectory matching unit 113. That is, the shift amount when any one of the curve A and the curve B is shifted in the time direction and coincides with the other is the time interval ΔTn.

Then, the estimated speed determination unit 114 obtains the speed V of the vehicle 101 using the expression of V = ΔDn/ΔTn from the distances L_{A}, L_{B}, and ΔTn.

According to the forms described above, in the first embodiment, the speed of the vehicle 101 traveling on the rails 102 can be recognized with high reliability by using the three-dimensional shape of the trolley wire 103 as the electric path equipment D for power supply developed above the vehicle 101. In the second embodiment, the speed of the vehicle 101 traveling on the rails 102 can be recognized with high reliability by using the three-dimensional shape of the catenary wire 104 as the electric path equipment D for power supply developed above the vehicle 101.

In the present embodiment, as compared with the case of using the rotation pulse of the wheel, calculation is not affected by spinning or sliding of the wheel, and thus a more accurate speed can be calculated. As compared with a method using a Doppler velocimeter or a spatial filter velocimeter using laser light or microwaves, by using the position at the distance Yc or the distance Zc with reference to the rail plane Hr, even if the distance between the sensing unit 108 and the object such as an overhead wire fluctuates, calculation is hardly affected, and a more accurate speed can be calculated. By calculating the speed of the vehicle 101 based on these trajectories, it is possible to calculate a more accurate speed. Furthermore, for the same reason, it is less likely to be affected by vibration or the like of the vehicle 101. Therefore, in the present embodiment, robust speed detection is possible.

Use of the trolley wire 103 and the catenary wire 104 makes calculation less affected by environmental changes as compared with a case of using other ground equipment. For example, when the electric path equipment D is used, calculation is hardly affected by snow accumulation. In this case, there is no need to rely on a global positioning system (GPS), map information, or the like.

In the example described in detail above, an overhead wire of a railway is used as an object for measuring a distance. The case where the overhead wire is at least one of the trolley wire 103 and the catenary wire 104 has been described. However, the overhead wire is not limited to this. For example, the hanger 105, the supporting tool 106, and the insulating tool 107 may be objects for measuring the distance. Not only the overhead wire but also ground equipment installed near the moving body may be used as an object for measuring the distance.

However, the object preferably has a position continuously shifting in accordance with movement of the vehicle 101. That is, the object preferably has a position continuously shifting such as the trolley wire 103 and the catenary wire 104, and has a position that is continuously measurable. In this case, the number of measurement points for measuring the distance is increased, whereby the measurement error can be reduced, and the position of the object can be measured more accurately. Even when the speed of the vehicle 101 changes, the speed can be calculated more accurately. That is, since the position can be continuously measured, the speed of the vehicle 101 can be calculated in real time. It can also be said that this provides good responsiveness at the time of calculating the speed of the vehicle 101. When the hanger 105, the supporting tool 106, the insulating tool 107, and the like is objects, they are discretely installed apart from one another by predetermined distances. Therefore, although the speed of the vehicle 101 can be calculated, when the speed of the vehicle 101 changes, the speed of the vehicle 101 cannot necessarily be calculated with high responsiveness. For example, the supporting tool 106 is large in size as described above, and has an advantage of being easily captured by the sensing unit 108. However, for example, since the supporting tools 106 are provided at intervals of several hundred meters, when the speed of the vehicle 101 is calculated based on them, the speed of the vehicle 101 cannot necessarily be calculated with high responsiveness.

In the example described in detail above, a case where the trolley wire 103 and the catenary wire 104 regularly shift has been described, but the present invention is not limited to this, and they may irregularly shift.

In the first embodiment, a case where the trolley wire 103 shifts in the left-right direction with the center line 102m as a center. However, the trolley wire 103 needs not shift with the center line 102m as a center.

In the example described in detail above, the distance is measured using the rails 102 or the overhead wire used when the vehicle 101 moves, and the speed of the vehicle 101 is calculated, but the present invention is not limited to this.

For example, in a case where there are a plurality of tracks, the tracks and overhead wires used to measure the distance may be different from those used when the vehicle 101 moves. That is, in a double-track section, it is possible to use a next track on which a vehicle (in this case, an oncoming train) traveling next travels and an overhead wire installed for the track. This corresponds to a case of using the left and right rails 102 positioned on the right side in the drawing and overhead wires thereabove, although for example, in FIG. 4, the vehicle 101 travels on the left and right rails 102 positioned on the left side in the drawing. Note that of course, this can be applied to cases of a quadruple track, a sextuple track, and the like.

### <Description of Speed Calculation Method>

Here, the processing performed by the speed recognition system 100 can be regarded as a speed calculation method including: measuring a distance from an object such as the trolley wire 103 and the catenary wire 104 and obtaining, based on a measurement result of the sensing unit 108 installed in the vehicle 101 moving on the rails 102, a first position, which is a position of the object with reference to the rails 102 at a place away from the sensing unit 108 by the distance L_{A} and a second position, which is a position of the object with reference to the rails 102 at a place away from the sensing unit 108 by the distance L_{B}; and calculating a speed of the vehicle 101 based on a difference (distance interval ΔDn between the distance L_{A} and the distance L_{B}) and a difference (time interval ΔTn) between times when the first position and the second position coincide with each other.

Although the present embodiment has been described above, the technical scope of the present invention is not limited to the scope described in the above embodiments. It is apparent from the description of the claims that various modifications or improvements added to the above embodiments are included in the technical scope of the present invention.

### Reference Signs List

- 1: train control system
- 100: speed recognition system
- 101: vehicle
- 102: rail
- 103: trolley wire
- 104: catenary wire
- 108: sensing unit
- 109: overhead wire recognition unit
- 110: rail surface recognition unit
- 111: overhead wire position calculation unit
- 112-1 to 112-N: overhead wire trajectory calculation unit
- 113: overhead wire trajectory matching unit
- 114: estimated speed determination unit
- 115: control unit
- D: electric path equipment
- Hr: rail plane

## Claims

1. A speed calculation device, comprising:
a position calculation unit that measures a distance to an object and obtains, based on a measurement result of a distance sensor installed in a moving body that moves on a track, a first position, which is a position of the object with reference to the track at a place away from the distance sensor by a first distance, and a second position, which is a position of the object with reference to the track at a place away from the distance sensor by a second distance; and
a speed calculation unit that calculates a speed of the moving body based on a difference between the first distance and the second distance and a difference between times when the first position and the second position coincide with each other.

2. The speed calculation device according to claim 1, wherein the object has a position continuously shifting in accordance with movement of the moving body.

3. The speed calculation device according to claim 2, wherein the object having a position continuously shifting is an overhead wire of a railway.

4. The speed calculation device according to claim 3, wherein the overhead wire is at least one of a trolley wire and a catenary wire.

5. The speed calculation device according to claim 4, wherein the position calculation unit obtains the first position and the second position that change by the trolley wire shifting in a left-right direction in accordance with movement of the moving body.

6. The speed calculation device according to claim 4, wherein the position calculation unit obtains the first position and the second position that change by the catenary wire shifting in an up-down direction in accordance with movement of a train.

7. The speed calculation device according to claim 3, wherein there are a plurality of the tracks, and the track and the overhead wire for obtaining the first position and the second position are different from the track and the overhead wire used when the mobile body moves.

8. The speed calculation device according to claim 1, further comprising a trajectory calculation unit that obtains a trajectory of each of the first position and the second position,
wherein the speed calculation unit calculates a speed of the moving body based on the trajectory.

9. The speed calculation device according to claim 8, further comprising a trajectory matching unit that obtains the difference between the times by performing matching of the trajectory of each of the first position and the second position.

10. The speed calculation device according to claim 1, further comprising a track recognition unit that extracts a first point group corresponding to the track as a plurality of points whose distances are measured by the distance sensor,
wherein the position calculation unit obtains the first position and the second position with reference to a track plane that is a plane including the first point group.

11. The speed calculation device according to claim 10, further comprising an object recognition unit that extracts a second point group corresponding to the object at the first position and the second position as a plurality of points whose distances are measured by the distance sensor,
wherein the position calculation unit calculates the first distance and the second position by classifying the second point group by distance and performing coordinate system conversion with reference to the track plane.

12. The speed calculation device according to claim 11, wherein
the distance sensor measures a distance on planes present at at least three distances as a plane intersecting a moving direction of the moving body, and
the track recognition unit extracts the first point group from a measurement result on a plane present at one distance among the three distances and extracts the second point group from a measurement result on planes present at distances other than the one distance among the at least three distances.

13. The speed calculation device according to claim 10 or 11, wherein the plurality of points are acquired from the distance sensor attached to a side surface side of a vehicle relative to a center line in an up-down direction on a plane intersecting a moving direction of the moving body.

14. A speed calculation method, comprising:
measuring a distance to an object and obtaining, based on a measurement result of a distance sensor installed in a moving body that moves on a track, a first position, which is a position of the object with reference to the track at a place away from the distance sensor by a first distance, and a second position, which is a position of the object with reference to the track at a place away from the distance sensor by a second distance; and
calculating a speed of the moving body based on a difference between the first distance and the second distance and a difference between times when the first position and the second position coincide with each other.

15. A moving body control system, comprising:
a speed calculation device that calculates a speed of a moving body moving on a track; and
a control device that controls movement of the moving body based on a calculated speed,
wherein the speed calculation device includes
a position calculation unit that measures a distance to an object and obtains, based on a measurement result of a distance sensor installed in the moving body, a first position, which is a position of the object with reference to the track at a place away from the distance sensor by a first distance, and a second position, which is a position of the object with reference to the track at a place away from the distance sensor by a second distance, and
a speed calculation unit that calculates the speed of the moving body based on a difference between the first distance and the second distance and a difference between times when the first position and the second position coincide with each other.
